# EUROPÄISCHE PATENTSCHRIFT

(11) **EP 1 902 944 B1**
(45) Veröffentlichungstag und Bekanntmachung des Hinweises auf die Patenterteilung: **13.04.2016**
(21) Anmeldenummer: 07016036.1
(22) Anmeldetag: 16.08.2007
(51) Int. Cl.: B63H 21/17, B63H 23/24, H02P 3/00, B60L 15/00

(54) **Schiffsantrieb**
Ship propulsion
Propulsion navale

(30) Priorität: 20.09.2006 DE 102006044742
(43) Veröffentlichungstag der Anmeldung: 26.03.2008
(73) Patentinhaber: Schniewindt GmbH & Co. KG, 58809 Neuenrade (DE)
(72) Erfinder: Graeve, Peter, 58809 Neuenrade (DE)
(74) Vertreter: Lelgemann, Karl-Heinz

(56) Entgegenhaltungen:
- EP-A1- 0 611 675
- EP-A2- 1 614 621
- JP-A- 1 274 679
- JP-A- 2007 125 909
- ANONYMOUS: 'VACON CX/CXL/CXS FREQUENCY CONVERTERS Brake choppers and resistors Subject to changes withour notice', [Online] 09 Oktober 2000, VAASA, FINLAND, Seiten 1 - 16, XP055167558 Gefunden im Internet: <URL:http://www.vacon.com/ImageVaultFiles/i d_3339/cf_2/Vacon-CX-Brake-Choppers-Resisto rs-User-Manual-Ud21.PDF?634852866600730000> [gefunden am 2015-02-05]
- Clayton & Shelley: "Elementary Electrical Engineering", 1 July 1946 (1946-07-01), Longmans * page 1 - page 10 *

## Beschreibung

Die Erfindung bezieht sich auf einen Schiffsantrieb mit einer elektrischen Energieerzeugung, mittels der elektrische Energie in ein Schiffsnetz einspeisbar ist, und einem elektrischen Propulsionsantrieb, der durch das Schiffsnetz mit elektrischer Energie versorgbar ist und der eine Bremseinrichtung zur Abbremsung des elektrischen Propulsionsantriebs bei entsprechenden Manövern eines Marineschiffs aufweist.

Dokument EP 1 614 621 wird als nächstliegender Stand der Technik angesehen. Dokument EP 1 614 621 offenbart den Oberbegriff des Anspruchs 1.

Für derartige Schiffsantriebe kommen zunehmend elektrische Propulsionsantriebe zum Einsatz, für die bei modernen Auslegungen der Schiffsnetze aus dem Stand der Technik bekannte Bremseinrichtungen, bei denen beispielsweise bei Abbremsungen des elektrischen Propulsionsantriebs auf Generatorbetrieb umgestellt und elektrische Energie in das Schiffsnetz eingespeist wird, nicht mehr zufrieden stellend eingesetzt werden können. Hierfür ursächlich sind z.B. in den Schiffsantrieben bzw. den Schiffsnetzen vorgesehene Um-, Gleichrichter ud.dgl..

Der Erfindung liegt die Aufgabe zugrunde, einen Schiffsantrieb der eingangs geschilderten Gattung derart weiterzubilden, dass ein elektrischer Propulsionsantrieb des Schiffsantriebs bei allen denkbaren Anforderungsprofilen mit der gewünschten Leistung abgebremst werden kann.

Diese Aufgabe wird erfindungsgemäß dadurch gelöst, dass die Bremseinrichtung des elektrischen Propulsionsantriebs als elektrischer Bremswiderstand ausgebildet ist. Bei dieser Ausgestaltung der Bremseinrichtung können alle derzeit bekannten elektrischen Propulsionsantriebe, z.B. auch zunehmend gebräuchlicher werdende sog. POD-Antriebe, bei allen denkbaren Anforderungsprofilen für Manöver eines Marineschiffs mit der gewünschten Leistung abgebremst werden, ohne dass das Schiffsnetz hierfür in besonderer Weise ausgelegt werden müsste.

Vorteilhaft kann der elektrische Bremswiderstand des erfindungsgemäßen Schiffsantriebs so ausgelegt sein, dass er an Bord des Marineschiffs ohne weiteres installiert werden kann. Bei Einsatz eines sog. POD-Antriebs besteht bei entsprechender Auslegung des elektrischen Bremswiderstands auch die Möglichkeit, diesen nahe bzw. am POD-Antrieb anzuordnen.

Der elektrische Bremswiderstand weist vorteilhaft ein metallisches Gehäuse mit einem Gehäuserahmen und vorzugsweise mit dem Gehäuserahmen verschraubbaren Wandplatten auf.

Zur räumlichen Befestigung des elektrischen Bremswiderstands kann das metallische Gehäuse einen bodenseitigen Fixierrahmen zur Anbringung des elektrischen Bremswiderstands an einem Deckboden haben.

Der Gehäuserahmen und der Fixierrahmen des metallischen Gehäuses des elektrischen Bremswiderstands sind vorteilhaft tauch-, feuer- bzw. heißverzinkt.

Die aktiven Widerstandsteile sowie die Wandplatten des elektrischen Bremswiderstands können aus rostfreiem Stahl ausgebildet sein.

Das metallische Gehäuse des elektrischen Bremswiderstands ist, z.B. wegen seiner räumlichen Anordnung an Bord eines Marineschiffs, zweckmäßigerweise in der Schutzart IP44 ausgestaltbar.

Der elektrische Bremswiderstand hat zumindest einen Widerstandsblock, kann jedoch auch zwei Widerstandsblöcke aufweisen, wobei jeder Widerstandsblock zwei Widerstandszweige hat, die an einem Ende bzw. an einem Nullpunkt miteinander verbunden sind.

Die aktiven Widerstandsteile jedes Widerstandsblocks des elektrischen Bremswiderstands sind vorteilhaft als mäanderförmige Widerstandselemente ausgebildet und in Reihe mit den beiden Widerstandszweigen verbunden.

Als Werkstoff für den Widerstand bzw. als Widerstandswerkstoff kommt insbesondere NiCrMo 25-20-5 nach DIN 1.4539 in Frage.

Zum zuverlässigen Abtransport bzw. zur zuverlässigen Beseitigung der bei Abbremsungen des elektrischen Propulsionsantriebs entstehenden Wärmeentwicklung ist der elektrische Bremswiderstand zu seiner Kühlung vorteilhaft mit einem Luft/Wasser-Wärmetauscher ausgerüstet, der innerhalb des metallischen Gehäuses angeordnet ist. Mittels dieses Luft/Wasser-Wärmetauschers kann entstehende Wärmeenergie zuverlässig und mit der erforderlichen Kapazität aus dem metallischen Gehäuse des elektrischen Bremswiderstands abgeleitet werden.

Der Luft/Wasser-Wärmetauscher des elektrischen Bremswiderstands ist vorteilhaft in Einfachrohrbauart ausgestaltet.

Der Luft/Wasser-Wärmetauscher besteht zweckmäßigerweise aus rostfreiem Stahl gemäß DIN 1.4571.

Wenn er stattdessen aus dem Werkstoff CuNi 10 Fe hergestellt ist, kann auch Seewasser als Kühlmedium eingesetzt werden.

Zweckmäßigerweise ist der innerhalb des metallischen Gehäuses angeordnete Luft/Wasser-Wärmetauscher des elektrischen Bremswiderstands an eine externe sekundäre Wasserkühlvorrichtung angeschlossen, mittels der das Kühlmedium des Luft/Wasser-Wärmetauschers gekühlt werden kann.

Als Kühlmedium des Luft/Wasser-Wärmetauschers können dann vorteilhaft Frischwasser oder ein Wasser/Glykol-Gemisch zum Einsatz kommen.

Der elektrische Bremswiderstand ist vorteilhaft für einen adiabatischen Energieverbrauch ausgelegt.

Um den bei Anordnung des elektrischen Bremswiderstands an Bord eines Marineschiffes gestellten Anforderungsprofilen hinsichtlich seiner Schwingung zu genügen, ist der elektrische Bremswiderstand in einem Schwingungsfrequenzbereich von 2 bis 13,2 Hz und bei einer Schwingungsverschiebungsamplitude von +/-1 mm sowie vorteilhaft auch in einem Schwingungsbereich von 13,2 bis 100 Hz und bei einer Schwingungsspitzenbeschleunigung von 0,7 g vibrationsfest ausgebildet.

Vorteilhaft ist an einer Seite des metallischen Gehäuses des elektrischen Bremswiderstands eine Kabelabschlussbox am Gehäuserahmen des metallischen Gehäuses befestigt, die im Wesentlichen dem Anschluss der Leistungskabel des elektrischen Bremswiderstands dient.

Am Boden der Kabelabschlussbox ist vorteilhaft für den Eingang der Leistungskabel eine Buchsenplatte vorgesehen.

Innerhalb der Kabelabschlussbox sind zum Kabelanschluss der Leistungskabel Anschlussfahnen vorgesehen.

Vorteilhaft sind im metallischen Gehäuse des elektrischen Bremswiderstands eine, vorzugsweise zwei, Heizeinrichtungen vorgesehen.

Des Weiteren sollte zweckmäßigerweise in der Kabelabschlussbox eine weitere Heizeinrichtung angeordnet sein.

Zum Anschluss der Heizeinrichtungen dient ein separater Kabelabschlussboxabschnitt, der vorzugsweise oberhalb des für die Leistungskabel vorgesehenen Bereichs in bzw. an der Kabelabschlüssbox angeordnet ist.

Um Beschädigungen aufgrund von z.B. aus dem Luft/Wasser-Wärmetauscher austretendem Wasser zu vermeiden, ist vorteilhaft am Boden des Gehäuserahmens des elektrischen Bremswiderstands ein Leckagefühler für Leckwasser angeordnet, dessen Anschlüsse in einem Steuerabschlussboxabschnitt angeordnet sind.

Um Überhitzungen des elektrischen Bremswiderstands bzw. in dessen metallischem Gehäuse möglichst auszuschließen, sind innerhalb des metallischen Gehäuses des elektrischen Bremswiderstands vorzugsweise nahe dem Luft/Wasser-Wärmetauscher zumindest ein, vorzugsweise zwei, Temperaturfühler angeordnet, deren Anschluss bzw. deren Anschlüsse im Steuerabschlussboxabschnitt angeordnet sind.

Im Folgenden wird die Erfindung anhand von Ausführungsformen unter Bezugnahme auf die Zeichnung näher erläutert.

Es zeigen:
- Figur 1: eine perspektivische Darstellung einer ersten Ausführungsform eines elektrischen Bremswiderstands des erfindungsgemäßen Schiffsantriebs;
- Figur 2: eine Vorderansicht des in Figur 1 gezeigten elektrischen Bremswiderstands;
- Figur 3: eine Seitenansicht des in Figur 1 gezeigten elektrischen Bremswiderstands;
- Figur 4: eine Draufsicht auf einen Fixierrahmen des in Figur 1 gezeigten elektrischen Bremswiderstands;
- Figur 5: eine Innenansicht einer Kabelabschlussbox des in Figur 1. gezeigten elektrischen Bremswiderstands;
- Figur 6: einen Schaltplan des in Figur 1 gezeigten elektrischen Bremswiderstands;
- Figur 7: eine perspektivische Darstellung einer weiteren Ausführungsform des elektrischen Bremswiderstands eines erfindungsgemäßen Schiffsantriebs;
- Figur 8: eine Vorderansicht des in Figur 7 gezeigten elektrischen Bremswiderstands;
- Figur 9: eine Seitenansicht des in Figur 7 gezeigten elektrischen Bremswiderstands;
- Figur 10: eine Innenansicht der Kabelabschlussbox des in Figur 7 gezeigten elektrischen Bremswiderstands; und
- Figur 11: einen Schaltplan des in Figur 7 gezeigten elektrischen Bremswiderstands.

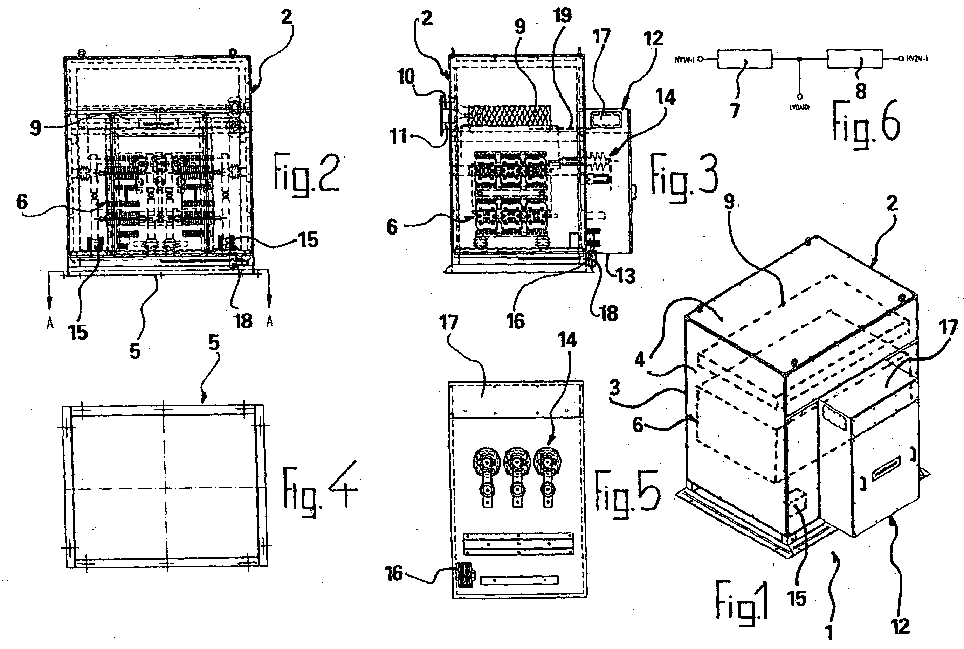

Ein in den Figuren 1 bis 6 dargestelltes erstes Ausführungsbeispiel eines elektrischen Bremswiderstands 1 ist Bestandteil eines Schiffsantriebs, zu dem des Weiteren eine elektrische Energieerzeugung, ein Schiffsnetz, in das die elektrische Energieerzeugung einspeist, und ein elektrischer Propulsionsantrieb gehören, der durch das Schiffsnetz mit elektrischer Energie versorgbar ist.

Der elektrische Bremswiderstand 1 dient zum Abbremsen des elektrischen Propulsionsantriebs bei entsprechenden Manövern des mit dem Schiffsantrieb ausgerüsteten Marineschiffs.

Der elektrische Bremswiderstand 1 hat ein metallisches Gehäuse 2, welches in der Schutzart IP44 ausgeführt ist.

Zu dem metallischen Gehäuse 2 gehört ein Gehäuserahmen 3, an dem Wandplatten 4 angebracht, z.B. verschraubt sind.

Die Wandplatten 4 sind thermisch isoliert ausgestaltet und aus rostfreiem Stahl hergestellt.

Des Weiteren ist das metallische Gehäuse 2 mit einem bodenseitigen Fixierrahmen 5 versehen, mittels dem es am Deckboden befestigt ist. Der Gehäuserahmen 3 und der Fixierrahmen 5 des metallischen Gehäuses sind tauch-, feuer- oder heißverzinkt.

Die Oberfläche des metallischen Gehäuses 2 des elektrischen Bremswiderstands 1 ist nicht mit einem Farbanstrich versehen.

Wie die Wandplatten 4 des metallischen Gehäuses 2 sind auch aktive Widerstandsteile des elektrischen Bremswiderstands 1 aus rostfreiem Stahl ausgebildet.

Bei der in den Figuren 1 bis 6 gezeigten Ausführungsform des elektrischen Bremswiderstands 1 hat dieser einen Widerstandsblock 6, zu dem, wie sich insbesondere aus Figur 6 ergibt, zwei Widerstandszweige 7 und 8 gehören, die aus mäanderförmigen Widerstandselementen bestehen, die zueinander in Reihe geschaltet sind. Die beiden Widerstandszweige 7, 8 sind an einem Ende bzw. am Nullpunkt miteinander verbunden, wie sich ebenfalls am besten aus Figur 6 ergibt.

Der Widerstandsblock 6 ist im metallischen Gehäuse 2 des elektrischen Bremswiderstands 1 angeordnet und für adiabatischen Energieverbrauch ausgelegt. Bei maximalem Energieverbrauch wird der elektrische Bremswiderstand 1 Temperaturen von bis 550 Grad C erreichen, wobei während einer Abkühlperiode von zehn Minuten die Wärmeenergie aus dem metallischen Gehäuse 2 abgeleitet wird.

Hierzu dient ein innerhalb des metallischen Gehäuses 2 des elektrischen Bremswiderstands 1 angeordneter Luft/Wasser-Wärmetauscher 9, der im dargestellten Ausführungsbeispiel in Einfachrohrbauart ausgeführt ist und über Anschlussstutzen 10, 11 an eine externe, in den Figuren nicht dargestellte sekundäre Wasserkühlvorrichtung angeschlossen ist. Der Luft/Wasser-Wärmetauscher 9 ist aus rostfreiem Stahl 1.4571 hergestellt. Als Kühlmedium für den Luft/Wasser-Wärmetauscher dient Frischwasser oder eine Wasser/Glykol-Mischung. Die Nennströmungsmenge des Kühlmediums beträgt 250 1/min mit einem Bereich für die Eingangstemperatur zwischen 5 Grad C und 43 Grad C. Die minimale Strömungsmenge des Kühlmediums beträgt 230 1/min, der Druckabfall etwa 16 kPa, der Betriebsdruck weniger als 5 bar, der Testdruck 10 bar, der durchschnittliche Temperaturanstieg des Kühlmediums weniger als 20 K, der maximale Temperaturanstieg des Kühlmediums weniger als 50 K, die Umgebungstemperatur maximal 60 Grad C und minimal 5 Grad C.

Die Auslegung des elektrischen Bremswiderstands 1 berücksichtigt dessen Einbau in Räumen an Bord eines Marineschiffs, wobei bei der gezeigten Ausführungsform seine Vibrationsfestigkeit für die folgenden Schwingungsanforderungen gewährleistet ist:
- In einem Schwingungsfrequenzbereich von 2 bis 13,2 Hz bei einer Schwingungsverschiebungsamplitude von +/-1 mm;
- in einem Schwingungsfrequenzbereich von 13,2 bis 100 Hz bei einer Schwingungsspitzenbeschleunigung von 0,7 g.

Als Werkstoff für den Widerstandsblock des elektrischen Bremswiderstands 1 ist insbesondere NiCrMo 25-20-5 nach DIN 1.4539 geeignet.

An einer Seite des metallischen Gehäuses 2 des elektrischen Bremswiderstands 1 ist eine Kabelabschlussbox 12 am Gehäuserahmen 3 des metallischen Gehäuses 2 befestigt. Für die Einführung der Leistungskabel, bei denen es sich im dargestellten Ausführungsbeispiel um drei Einzelphasenkabel handelt, ist am Boden der Kabelabschlussbox 12 eine Buchsenplatte 13 vorgesehen. Innerhalb der Kabelabschlussbox 13 wird der Kabelanschluss mittels Anschlussfahnen 14 realisiert, die in nickelplattiertem Kupfer ausgeführt sind und Abmessungen von 50 x 10 mm aufweisen.

Im dargestellten Ausführungsbeispiel des elektrischen Bremswiderstands 1 sind innerhalb des metallischen Gehäuses 2 zwei Heizeinrichtungen 15 vorgesehen, die mit einer Versorgungsspannung von 240 V bei 60 Hz arbeiten und jeweils eine Leistung von 100 W aufweisen.

Innerhalb der Kabelabschlussbox 12 ist eine weitere Heizeinrichtung 16 vorgesehen, die ebenfalls mit einer Versorgungsspannung von 240 V bei 60 Hz arbeitet und eine Leistung von 50 W aufweist.

Für die Heizeinrichtungen 15, 16 bzw. für deren Anschluss ist ein separater Kabelabschlussboxabschnitt 17 vorgesehen, der im oberen Bereich der Kabelabschlussbox 12 angeordnet ist.

Im unteren Bereich des metallischen Gehäuses 2 ist ein Leckagefühler 18 angeordnet, mittels dem Leckwasser erfassbar ist. Die Anschlüsse des Leckagefühlers 18 sind in dem auch als Steuerabschlussboxabschnitt dienenden Kabelabschlussboxabschnitt 17 im oberen Bereich der Kabelabschlussbox 12 vorgesehen.

Nahe dem Luft/Wasser-Wärmetauscher 9 sind innerhalb des metallischen Gehäuses 2 des elektrischen Bremswiderstands 1 zwei Temperaturfühler 19, vorzugsweise PT100 Temperaturelemente, installiert. Mittels dieser Temperaturfühler 19 kann die Lufttemperatur oberhalb der Widerstandselemente des Widerstandsblocks 6 des elektrischen Bremswiderstands 1 innerhalb des metallischen Gehäuses 2 gemessen werden. Aufgrund dieser Temperaturmessung ist zwar kein Schutz des elektrischen Bremswiderstands 1 gegen Überhitzung möglich, jedoch können die Temperaturfühler 19 die Temperatur innerhalb des metallischen Gehäuses 2 anzeigen, wobei aufgrund dieser Anzeige überprüft werden kann, ob die Abkühlperiode des elektrischen Bremswiderstands ausreichend ist.

Die Anschlüsse der Temperaturfühler 19 sind im als Steuerabschlussboxabschnitt dienenden Kabelabschlussboxabschnitt 17 im oberen Bereich der Kabelabschlussbox 12 vorgesehen.

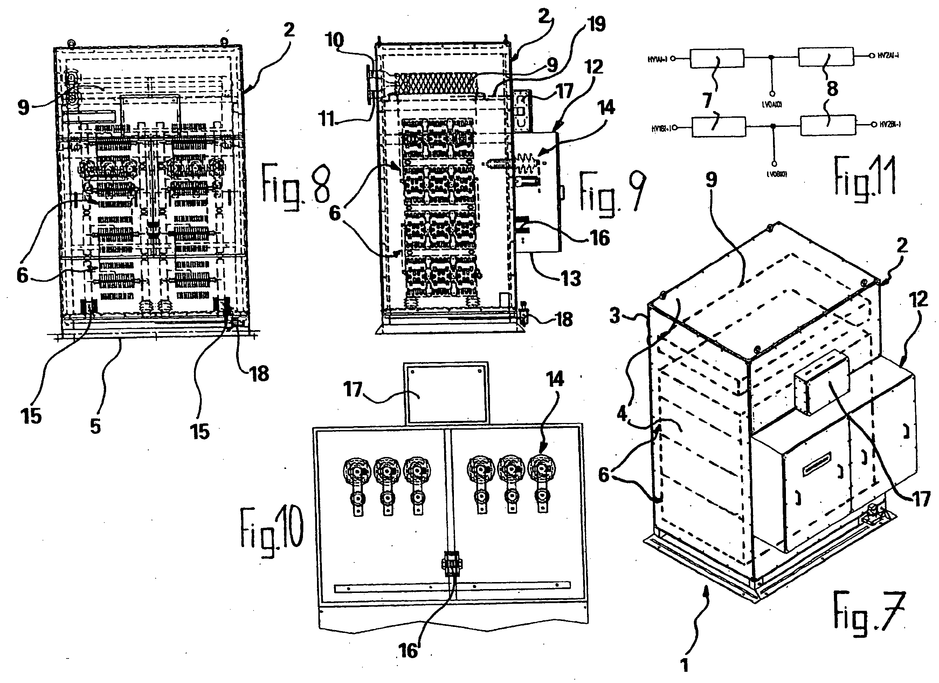

Die anhand der Figuren 7 bis 11 gezeigte weitere Ausführungsform des elektrischen Bremswiderstands 1 unterscheidet sich von der vorstehend beschriebenen insbesondere dadurch, dass innerhalb des metallischen Gehäuses 2, wie am besten aus Figur 11 hervorgeht, zwei Widerstandsblöcke 6 vorgesehen sind, wobei der grundsätzliche Aufbau jedes Widerstandsblocks 6 demjenigen des anhand der Figuren 1 bis 6 beschriebenen Ausführungsbeispiels entspricht.

Der Widerstandswert bei 20 Grad C beträgt 4 x 7,2 Ohm statt 2 x 5,5 Ohm beim ersten Ausführungsbeispiel, der Widerstandswert bei 550 Grad C entspricht 4 x 8,93 Ohm statt 2 x 6,82 Ohm.

Die Abkühlperiode beträgt 15 bzw. 45 Minuten, wobei eine Nennkühlmediumströmungsrate von 285 1/min und eine minimale Kühlmediumdurchflussrate von 250 1/min vorgegeben ist. Der Durchschnittstemperaturanstieg des Kühlmediums liegt unterhalb von 20 K, der maximale Temperaturanstieg des Kühlmediums unter 50 K. Die maximale Umgebungstemperatur darf 70 Grad C nicht überschreiten.

## Patentansprüche

1. Schiffsantrieb, mit einer elektrischen Energieerzeugung, mittels der elektrische Energie in ein Schiffsnetz einspeisbar ist, und einem elektrischen Propulsionsantrieb, der durch das Schiffsnetz mit elektrischer Energie versorgbar ist und der eine elektrische Bremseinrichtung (1) aufweist, wobei die elektrische Bremseinrichtung (1) des elektrischen Propulsionsantriebs als elektrischer Bremswiderstand (1) ausgebildet ist, **dadurch gekennzeichnet, dass** der Bremswiderstand ausgestattet ist mit zumindest einen Widerstandsblock (6) bzw. zwei Widerstandsblöcken (6), wobei jeder Widerstandsblock (6) zwei Widerstandszweige (7, 8) aufweist, die an einem Ende bzw. an einem Nullpunkt miteinander verbunden sind, und einem Luft/Wasser-Wärmetauscher (9), der innerhalb eines metallischen Gehäuses (2) des elektrischen Bremswiderstands (1) angeordnet ist.

2. Schiffsantrieb nach Anspruch 1, dessen elektrischer Bremswiderstand (1) so ausgelegt ist, dass er an Bord eines Marineschiffes installierbar ist.

3. Schiffsantrieb nach Anspruch 2, dessen elektrischer Bremswiderstand (1) ein metallisches Gehäuse (2) mit einem Gehäuserahmen (3) und vorzugsweise mit dem Gehäuserahmen (3) verschraubbaren Wandplatten (4) aufweist.

4. Schiffsantrieb nach Anspruch 3, bei dem das metallische Gehäuse (2) des elektrischen Bremswiderstands (1) einen bodenseitigen Fixierrahmen (5) zur Anbringung des elektrischen Bremswiderstands (1) am Deckboden aufweist.

5. Schiffsantrieb nach Anspruch 4, bei dem der Gehäuserahmen (3) und der Fixierrahmen (5) des metallischen Gehäuses (2) des elektrischen Bremswiderstands (1) tauch-, feuer- bzw. heißverzinkt sind.

6. Schiffsantrieb nach einem der Ansprüche 3 bis 5, bei dem aktive Widerstandsteile und Wandplatten (4) des elektrischen Bremswiderstands (1) aus rostfreiem Stahl ausgebildet sind.

7. Schiffsantrieb nach einem der Ansprüche 3 bis 6, bei dem das metallische Gehäuse (2) des elektrischen Bremswiderstands (1) in der Schutzart IP44 ausgebildet ist.

8. Schiffsantrieb nach Anspruch 1, bei dem die aktiven Widerstandsteile jedes Widerstandsblocks (6) des elektrischen Bremswiderstands (1) als mäanderförmige Widerstandselemente ausgebildet und in Reihe mit den beiden Widerstandszweigen (7, 8) verbunden sind.

9. Schiffsantrieb nach Anspruche 1 oder 8, bei dem als Widerstandswerkstoff NiCrMo 25-20-5 nach DIN 1.4539 vorgesehen ist.

10. Schiffsantrieb nach Anspruch 1, bei dem der Luft/Wasser-Wärmetauscher (9) des elektrischen Bremswiderstands (1) in Einfachrohrbauart ausgebildet ist.

11. Schiffsantrieb nach Anspruch 1 oder 10, bei dem der innerhalb des metallischen Gehäuses (2) angeordnete Luft/Wasser-Wärmetauscher (9) aus rostfreiem Stahl gemäß DIN 1.4571 ausgebildet ist.

12. Schiffsantrieb nach Anspruch 1 oder 10, bei dem der innerhalb des metallischen Gehäuses (2) angeordnete Luft/Wasser-Wärmetauscher (9) aus dem Werkstoff CuNi 10 Fe ausgebildet ist.

13. Schiffsantrieb nach einem der Ansprüche 1 bis 11, bei dem der innerhalb des metallischen Gehäuses (2) angeordnete Luft/Wasser-Wärmetauscher (9) des elektrischen Bremswiderstands (1) an eine externe sekundäre Wasserkühlvorrichtung angeschlossen ist.

14. Schiffsantrieb nach einem der Ansprüche 1 bis 11 und 13, bei dem als Kühlmedium des Luft/Wasser-Wärmetauschers (9) Frischwasser oder ein Wasser/Glykol-Gemisch vorgesehen ist.

15. Schiffsantrieb nach einem der Ansprüche 1 bis 14, bei dem der elektrische Bremswiderstand (1) für einen adiabatischen Energieverbrauch ausgelegt ist.

16. Schiffsantrieb nach einem der Ansprüche 1 bis 15, bei dem der elektrische Bremswiderstand in einem Schwingungsfrequenzbereich von 2 bis 13,2 Hz und bei einer Schwingungsverschiebungsamplitude von +/-1 mm vibrationsfest bleibt.

17. Schiffsantrieb nach einem der Ansprüche 1 bis 16, bei dem der elektrische Bremswiderstand in einem Schwingungsfrequenzbereich von 13,2 bis 100 Hz und bei einer Schwingungsspitzenbeschleunigung von 0,7 g vibrationsfest bleibt.

18. Schiffsantrieb nach einem der Ansprüche 3 bis 17, bei dem an einer Seite des metallischen Gehäuses (2) des elektrischen Bremswiderstands (1) eine Kabelabschlussbox (12) am Gehäuserahmen (3) des metallischen Gehäuses (2) befestigt ist.

19. Schiffsantrieb nach Anspruch 18, bei dem am Boden der Kabelabschlussbox (12) für den Eingang der Leistungskabel eine Buchsenplatte (13) vorgesehen ist.

20. Schiffsantrieb nach Anspruch 18 oder 19, bei dem innerhalb der Kabelabschlussbox (12) zum Kabelanschluss Anschlussfahnen (14) vorgesehen sind.

21. Schiffsantrieb nach einem der Ansprüche 3 bis 20, bei dem im metallischen Gehäuse (2) des elektrischen Bremswiderstands (1) eine, vorzugsweise zwei, Heizeinrichtungen (15) vorgesehen sind.

22. Schiffsantrieb nach einem der Ansprüche 18 bis 21, bei dem in der Kabelabschlussbox (12) eine Heizeinrichtung (16) angeordnet ist.

23. Schiffsantrieb nach einem der Ansprüche 18 bis 22, bei dem zum Anschluss der Heizeinrichtungen (15, 16) oberhalb der dem Anschluss der Leistungskabel dienenden Kabelabschlussbox (12) ein separater Kabelabschlussboxabschnitt (17) vorgesehen ist.

24. Schiffsantrieb nach einem der Ansprüche 18 bis 23, bei dem am Boden des Gehäuserahmens (3) des elektrischen Bremswiderstands (1) ein Leckagefühler (18) für Leckwasser angeordnet ist, dessen Anschlüsse in einem Steuerabschlussboxabschnitt (17) angeordnet sind.

25. Schiffsantrieb nach einem der Ansprüche 18 bis 24, bei dem innerhalb des metallischen Gehäuses (2) des elektrischen Bremswiderstands (1) vorzugsweise nahe dem Luft/Wasser-Wärmetauscher (9) zumindest ein, vorzugsweise zwei, Temperaturfühler (19) angeordnet sind, deren Anschlüsse im Steuerabschlussboxabschnitt (17) angeordnet sind.

## Claims

1. A ship propulsion system, with an electrical power generator, by means of which the electrical power can be fed into a ship's network, and an electrical propulsion drive, which can be supplied with electrical energy through the ship's network, and which has an electrical braking device (1), wherein
the electrical braking device (1) of the electrical propulsion drive is designed as an electrical braking resistance unit (1),
**characterised in that**,
the braking resistance unit is equipped with at least one resistor block (6) or two resistor blocks (6),
wherein
each resistor block (6) has two resistor branches (7, 8), which are connected with one another at one end, that is to say, at a null point, and an air/water heat exchanger (9), which is arranged within a metallic housing (2) of the electrical braking resistance unit (1).

2. The ship propulsion system in accordance with claim 1,
the electrical braking resistance unit (1) of which is designed such that it can be installed on board a naval vessel.

3. The ship propulsion system in accordance with claim 2,
the electrical braking resistance unit (1) of which has a metallic housing (2) with a housing frame (3), and preferably with wall panels (4) that can be bolted onto the housing frame (3).

4. The ship propulsion system in accordance with claim 3,
in which the metallic housing (2) of the electrical braking resistance unit (1) has a base-side fixing frame (5) for purposes of mounting the electrical braking resistance unit (1) on the decking.

5. The ship propulsion system in accordance with claim 4,
in which the housing frame (3) and the fixing frame (5) of the metallic housing (2) of the electrical braking resistance unit (1) are hot-dip galvanised.

6. The ship propulsion system in accordance with one of the claims 3 to 5,
in which active resistance parts and wall panels (4) of the electrical braking resistance unit (1) are designed in stainless steel.

7. The ship propulsion system in accordance with one of the claims 3 to 6,
in which the metallic housing (2) of the electrical braking resistance unit (1) is designed with IP 44 class of protection.

8. The ship propulsion system in accordance with claim 1,
in which the active resistance parts of each resistor block (6) of the electrical braking resistance unit (1) are designed as serpentine-shaped resistance elements, and are connected in series with the two resistor branches (7, 8).

9. The ship propulsion system in accordance with claim 1 or 8,
in which NiCrMo 25-20-5 in accordance with DIN 1.4539 is provided as the resistance material.

10. The ship propulsion system in accordance with claim 1,
in which the air/water heat exchanger (9) of the electrical braking resistance unit (1) is designed with a single tube form of construction.

11. The ship propulsion system in accordance with claim 1 or 10,
in which the air/water heat exchanger (9) arranged within the metallic housing (2) is designed in stainless steel in accordance with DIN 1.4571.

12. The ship propulsion system in accordance with claim 1 or 10,
in which the air/water heat exchanger (9) arranged within the metallic housing (2) is designed in the material CuNi 10 Fe.

13. The ship propulsion system in accordance with one of the claims 1 to 11,
in which the air/water heat exchanger (9) of the electrical braking resistance unit (1) arranged within the metallic housing (2) is connected to an external secondary water cooling device.

14. The ship propulsion system in accordance with one of the claims 1 to 11 and 13,
in which freshwater or a water/glycol mixture is provided as the cooling medium of the air/water heat exchanger (9).

15. The ship propulsion system in accordance with one of the claims 1 to 14,
in which the electrical braking resistance unit (1) is designed for adiabatic energy consumption.

16. The ship propulsion system in accordance with one of the claims 1 to 15,
in which the electrical braking resistance unit remains vibration-resistant in a vibration frequency range from 2 to 13.2 Hz, and with a vibration displacement amplitude of +/-1 mm.

17. The ship propulsion system in accordance with one of the claims 1 to 16,
in which the electrical braking resistance unit remains vibration-resistant in a vibration frequency range from 13.2 to 100 Hz, and with a vibration peak acceleration of 0.7 g.

18. The ship propulsion system in accordance with one of the claims 3 to 17,
in which a cable terminal box (12) is attached to the housing frame (3) of the metallic housing (2), on one side of the metallic housing (2) of the electrical braking resistance unit (1).

19. The ship propulsion system in accordance with claim 18,
in which a bushing plate (13) is provided on the base of the cable terminal box (12) for the entry of the power cable.

20. The ship propulsion system in accordance with claim 18 or 19,
in which terminal lugs (14) are provided within the cable terminal box (12) for purposes of cable connection.

21. The ship propulsion system in accordance with one of the claims 3 to 20,
in which one, preferably two, heating devices (15) are provided within the metallic housing (2) of the electrical braking resistance unit (1).

22. The ship propulsion system in accordance with one of the claims 18 to 21,
a heating device (16) is arranged in the cable terminal box (12).

23. The ship propulsion system in accordance with one of the claims 18 to 22,
in which for purposes of connecting the heating devices (15, 16) a separate cable terminal box section (17) is provided above the cable terminal box (12) serving to provide the connection of the power cable.

24. The ship propulsion system in accordance with one of the claims 18 to 23,
in which a leakage sensor (18) for leakage water is arranged on the base of the housing frame (3) of the
electrical braking resistance unit (1), the connections of which are arranged in a control terminal box section (17).

25. The ship propulsion system in accordance with one of the claims 18 to 24,
in which one, preferably two, temperature sensors (9) are arranged within the metallic housing (2) of the electrical braking resistance unit (1), preferably near the air/water heat exchanger (19), the connections of which sensors are arranged in the control terminal box section (17).

## Revendications

1. Propulsion de navire avec un production d'énergie électrique, au moyen de laquelle de l'énergie électrique peut être mise en alimentation dans un réseau de navire, et un système de propulsion électrique qui peut être approvsionné par le réseau du navire en énergie électrique et qui comporte un système de frein électrique (1), pour laquelle le système de frein électrique (1) du système de propulsion électrique est constitué comme une résistance de freinage électrique (1) **caractérisé en ce que** la résistance de freinage est équipée avec au moins un bloc de résistance (6) ou deux blocs de résistance (6), pour laquelle chaque bloc de résistance (6) comporte deux branches de résistance (7,8) qui sont reliées entre elles à une extrémité ou à un point neutre et un échangeur de chaleur air-eau (9) qui est disposé à l'intérieur d'un boîtier métallique (2) de la résistance de freinage électrique (1).

2. Propulsion de navire selon la revendication 1 dont la résistance de freinage électrique (1) est conçue de telle manière qu'elle peut être installée à bord d'un bâtiment de marine.

3. Propulsion de navire selon la revendication 2 dont la résistance de freinage électrique (1) comporte un boîtier métallique (2) avec un cadre de boîtier (3) et de préférence avec des plaques de paroi (4) pouvant être vissées au cadre de boîtier (3).

4. Propulsion de navire selon la revendication 3 pour laquelle le boîtier métallique (2) de la résistance de freinage électrique (1) comporte un cadre de fixation du côté du fond (5) pour monter la résistance de freinage électrique (1) sur le sol du pont.

5. Propulsion de navire selon la revendication 4 pour laquelle le cadre de boîtier (3) et le cadre de fixation (5) du boîtier métallique (2) de la résistance de freinage électrique (1) sont galvanisés par immersion, par trempage ou à chaud.

6. Propulsion de navire selon l'une quelconque des revendications 3 à 5 pour laquelle les pièces de résistances actives et les plaques de parois (4) de la résistance de freinage électrique (1) sont constituées en acier inoxydable.

7. Propulsion de navire selon l'une quelconque des revendications 3 à 6 pour laquelle le boîtier métallique (2) de la résistance de freinage électrique (1) est constitué selon le type de protection IP44.

8. Propulsion de navire selon la revendication 1 pour laquelle les pièces de résitance actives de chaque bloc de résistance (6) de la résistance de freinage électrique (1) sont constituées comme des éléments de résistance en forme dez méandres et sont reliées en série aux deux branches de résistance (7,8).

9. Propulsion de navire selon la revendication 1 ou 8 pour laquelle du NiCrMo 25-20-5 d'après la norme DIN 1.4539 est prévu comme matériau de résistance.

10. Propulsion de navire selon la revendication 1 pour laquelle l'échangeur de chaleur Air-Eau (9) de la résistance de freinage électrique (1) est constitué dans un type de construction tubulaire simple.

11. Propulsion de navire selon la revendication 1 ou 10 pour laquelle l'échangeur de chaleur Air-Eau (9) disposé à l'intérieur du boîtier métallique (2) est constitué en acier inoxydable selon la norme DIN 1.4571.

12. Propulsion de navire selon la revendication 1 ou 10 pour laquelle l'échangeur de chaleur Air-Eau (9) disposé à l'intérieur du boîtier métallique (2) est constitué en matériau CuNi 10 Fe.

13. Propulsion de navire selon l'une quelconque des revendications 1 à 11 pour laquelle l'échangeur de chaleur Air-Eau (9) de la résistance de freinage électrique (1), disposé à l'intérieur du boîtier métallique (2) est raccordé à un dispositif extérieur secondaire de refroidissement d'eau.

14. Propulsion de navire selon l'une quelconque des revendications 1 à 11 et 13 pour laquelle de l'eau douce ou un mélange eau-glycol est prévu comme milieu de refroidissement de l'échangeur de chaleur Air-Eau (9).

15. Propulsion de navire selon l'une quelconque des revendications 1 à 14 pour laquelle la résistance de freinage électrique (1) est conçue pour une consommation d'énergie adiabatique.

16. Propulsion de navire selon l'une quelconque des revendications 1 à 15 pour laquelle la résistance de freinage électrique reste résistante aux vibrations dans une plage de fréquences d'oscillations de 2 à 13,2 Hz et à une amplitude d'écart d'oscillation de +/- 1 mm.

17. Propulsion de navire selon l'une quelconque des revendications 1 à 16 pour laquelle la résistance de freinage électrique reste résistante aux vibrations dans une plage de fréquences d'oscillations de 13,2 à 100 Hz et à une acccélération maximale d'oscillations de 0,7 g.

18. Propulsion de navire selon l'une quelconque des revendications 3 à 17 pour laquelle un boîtier terminal de câbles (12) est fixé sur le cadre de boîtier (3) du boîtier métallique (2) sur un côté du boîtier métallique (2) de la résistance de freinage électrique (1).

19. Propulsion de navire selon la revendication 18 pour laquelle une plaque à douilles (13) est prévue au fond du boîtier terminal de câbles (12) pour l'entrée des câbles de puissance.

20. Propulsion de navire selon la revendication 18 ou 19 pour laquelle des barrettes de connexion (14) sont prévues à l'intérieur du boîtier terminal de câbles (12) pour la connexion de câbles.

21. Propulsion de navire selon l'une quelconque des revendications 3 à 20 pour laquelle un, de préférence deux systèmes de chauffage (15) sont prévus dans le boîtier métallique (2) de la résistance de freinage électrique (1).

22. Propulsion de navire selon l'une quelconque des revendications 18 à 21 pour laquelle un système de chauffage (16) est disposé dans le boîtier terminal de câbles (12).

23. Propulsion de navire selon l'une quelconque des revendications 18 à 22 pour laquelle une section du boîtier terminal de câbles (17) séparée est prévue pour la connexion des systèmes de chauffage (15,16) au-dessus du boîtier terminal de câbles (12) servant à la connexion des câbles de puissance.

24. Propulsion de navire selon l'une quelconque des revendications 18 à 23 pour laquelle un capteur de fuite (18) pour eau de fuite est disposé au fond du cadre de boîtier (3) de la résistance de freinage électrique (1), dont les connexions sont disposées dans une section du boîtier terminal de commande (17).

25. Propulsion de navire selon l'une quelconque des revendications 18 à 24 pour laquelle au moins une, de préférence deux sondes de température (19) sont disposées à l'intérieur du boîtier métallique (2) de la résistance de freinage électrique (1) de préférence près de l'échangeur de chaleur Air-Eau (9), dont les connexions sont disposées dans la section de boîtier terminal de commande (17).
